Europäisches Patentamt

European Patent Office

Office européen des brevets

(19)

(11) Publication number: **0 136 024**
**A2**

# EUROPEAN PATENT APPLICATION

(12)

(21) Application number: **84305476.8**

(22) Date of filing: **10.08.84**

(51) Int. Cl.⁴: **C 04 B  14/42**

(30) Priority: **31.08.83  GB 8323385**

(43) Date of publication of application: **03.04.85**
**Bulletin 85/14**

(84) Designated Contracting States: **AT BE CH DE FR GB IT LI LU NL SE**

(71) Applicant: **PILKINGTON BROTHERS P.L.C., Prescot Road St. Helens, Merseyside, WA10 3TT (GB)**

(72) Inventor: **Greig, Ian Robert Kennedy, 4 Cranwell Avenue, Culcheth Warrington Cheshire (GB)**
Inventor: **Knowles, Rodney Peter, 26 Arbury Avenue, Blackbrook St. Helens Merseyside (GB)**
Inventor: **Cheetham, Colin Jones, Balcarres House Brynore Criftins, Dudleston Heath Ellesmere Shropshire (GB)**

(74) Representative: **Sawers, Lawrence Peter et al, PAGE, WHITE & FARRER 5 Plough Place New Fetter Lane, London EC4A 1HY (GB)**

(54) **Producing glass fibre reinforced cement composite material.**

(57) In the production of glass fibre reinforced cement composite material, using glass fibre formed from continuous filaments which are sized with a liquid containing a protective material and are combined into strands, the strands are chopped to a desired length while still wet, or at least moist, with the size and subsequently dried before incorporation into a cement slurry from which the composite material is produced. The strands may be chopped immediately after they have been formed, or they my be wound into a cake and left to stand until the moisture content is from 4.5% to 7% by weight before chopping.

## PRODUCING GLASS FIBRE REINFORCED CEMENT COMPOSITE
## MATERIAL

This invention relates to methods of producing glass fibre reinforced cement composite materials.

Glass fibre for reinforcement of cement composite materials is generally used in the form of chopped strands, each strand comprising a multiplicity of glass filaments. It has been customary in most cases to produce the chopped strands immediately prior to their incorporation in a cement slurry, by unwinding a roving consisting of a number of strands from a wound package and passing the roving through a chopping device which produces a spray of the chopped strands. This technique is valuable for many purposes because of the advantage of being able to direct a spray of the chopped strands together with a spray of the cement slurry on to a former. In other processes however, a further mixing step is required to incorporate the chopped strands into the cement slurry. In these latter processes, problems have been encountered due to damage caused to the glass fibres by the mixing apparatus used, particularly breakage of the strands into small fragments or fraying of the ends of the multi-filament strands. Such damage to the fibres results in reduced strength of the cement composite material. Other problems have arisen from the difficulty of ensuring uniform incorporation of the glass fibres in the slurry. The longer that the mixing process is continued in order to distribute the fibres uniformly in the slurry, the greater the damage caused to the fibres. Various means have therefore been suggested for addition of the glass fibres at the end of the mixing process or by means of a specially designed static mixing apparatus, but these measures necessarily involve further complication.

The glass fibres have normally been produced in the conventional manner by drawing continuous filaments from the molten glass through a multiplicity of tips in a bushing, applying a size composition to the filaments, combining the sized filaments into a multi-filament strand, drying the strand and combining several strands into a roving, and winding the roving into a package.

The roving is unwound from the package when it is to be chopped to produce the chopped strands, so that the chopping is normally effected when the strands are fully dried.

A technique is, however, known for wet chopping glass fibre, in which the strands are chopped in their wet state immediately after the filaments have been drawn, sized and combined into strands, and the chopped strands are thereafter dried. Such a technique is described in the U.S. Patent Specifications Nos. 3869268, 3996032 and 4024647 of PPG Industries Inc., for example. The use of this technique is advocated in these U.S. Patent Specifications because it avoids the costly operation of winding and unwinding the strands or roving and the wastage which occurs during that operation. It is also indicated that, because of the avoidance of unwinding and like steps, the size used does not have to be chosen to provide protection during those steps, suggesting that a different size may be used from that normally employed when chopped strands are to be produced from a dried roving.

We have surprisingly found that, when employing sizes containing a protective material for reducing the deterioration of the glass fibres in a cement matrix as described in our prior U.K. Patent Specifications Nos. 1465059 and 1565823, glass fibres with a better resistance to damage in a mixing process and consequently a better performance as reinforcement in a cementitious matrix can be produced by chopping the strands while still wet or at least moist with the size, rather than by chopping the strands after drying.

According to the invention, therefore, there is provided a method of producing a glass fibre reinforced cement composite material in which glass fibre in the form of chopped strands is incorporated into a cement slurry by a mixing process, wherein the chopped strands used are formed by chopping strands while they are still wet or at least moist with a size containing a protective material to reduce deterioration of the glass fibre in the cement matrix, and drying the chopped strands before incorporating them into the slurry.

The chopped strands used may be formed by sizing glass filaments as they are drawn from the molten glass with an aqueous size containing the protective material, forming the wet sized filaments into strands and immediately thereafter chopping the wet strands, and drying the chopped strands thus produced before incorporating them in the cement slurry. In this case, the wet strands generally have a moisture content of around 9% by weight at the time when they are chopped.

In some cases, it is found preferable to control the moisture content of the strands so as to be within the range from 4.5% to 7% by weight when chopping is effected, and preferably to be substantially 5.5%. For this purpose, the chopped strands used may be formed by sizing glass filaments as they are drawn from the molten glass with an aqueous size containing the protective material, forming the wet sized filaments into strands, winding the wet strands into a cake, allowing the cake to stand in ambient conditions until the moisture content of the strands is reduced to a level within the range from 4.5% to 7% by weight, unwinding the moist strands from the cake and chopping them to produce the chopped strands and drying the chopped strands before incorporating them in the cement slurry.

Preferably the chopped strands are dried in a rotary drier.

The protective material contained in the size may be a polyhydroxy substituted aromatic compound, e.g. one of those described in our U.K. Patent Specifications Nos. 1465059 and 1565823.

It has been found that the mixing time which can be withstood by wet chopped strand glass fibre in accordance with the invention is an order of magnitude greater than that for glass fibre which has been chopped after drying.

Particularly in the manufacture of glass fibre reinforced composite material in apparatus originally designed for use with asbestos fibre, such an improvement makes possible the use of the normal types of mixing apparatus, which had previously been ruled out because of the physical damage to the glass fibres which occurred during mixing.

Specific embodiments of the invention will now be described in more detail by way of example and with reference to the accompanying drawings, in which:-

Figure 1 is a graph illustrating the results of comparative tests of damage caused to dry-chopped and wet-chopped glass fibre strands on mixing into a cement slurry,

Figures 2 and 3 are diagrammatic elevations, taken at right angles to one another, showing the production of a glass fibre strand and winding of the strand into a "cake",

Figures 4 and 5 are respectively a diagrammatic elevation and plan view of apparatus for producing chopped strand glass fibres from cakes of fibres made as illustrated in Figures 2 and 3,

Figure 6 is a diagrammatic side view of a machine of the Magnani type, for making sheets of cement composite material,

Figure 7 is a diagrammatic elevation of a Magnani type pipe making machine, and

Figure 8 is a diagrammatic elevation of a machine, of the Hatschek type for making sheets of cement composite material.

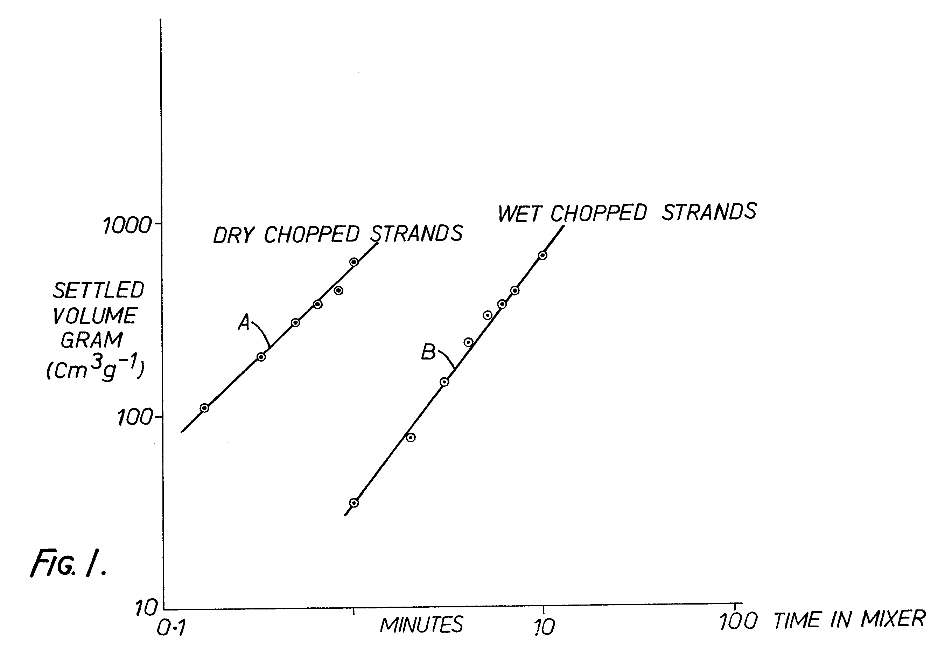

Referring to Figure 1, a simple test has been devised for comparing experimentally on a small scale the resistance to damage of chopped strands when being mixed into a cement slurry. In this test, a standard slurry is formulated of similar composition and consistency to that used in the conventional Magnani asbestos cement machines, which is the thickest slurry encountered in a major market for glass fibres as a reinforcement. A standard amount of the chopped strands is mixed into a standard amount of the slurry in a normal planetary domestic mixer, of the type sold by Kenwood, for varying time periods. Samples of the fibre are then washed free from slurry and allowed to settle in water and the settled volume of fibre is measured. Comparison of the settled volume per gram of glass fibre obtained after various mixing times provides a measure of the damage caused to the fibre, because the greater the damage the larger the settled volume.

The composition of the mix used to form the standard slurry is as follows:-

808 gms pozzolan PFA

794 gms limestone flour

13.5 gms hydrated lime

0.44 gms wetting agent

584 gms water

This mix was prepared in a high speed mixer and on completion, 37 g of 12 mm long chopped strands were added carefully by hand. The slurry was then transferred to the bowl of a Kenwood mixer and was beaten at 120 rpm for varying periods of time using the standard 'K' blade.

At each time interval, 3 samples each of approximately 100 g were taken. The glass was rinsed free from slurry in a wire basket and put into a litre measuring cylinder. Water was added to 1 litre and the cylinder inverted ten times before being placed on a flat horizontal surface, allowing the volume of glass to be measured after 1 minute. The fibre was then retrieved and dried at 120° C before weighing. The three results were then converted to volume/gram and the mean calculated.

Figure 1 shows mixing time plotted against settled volume/gram of glass fibre, for dry-chopped strands (line A) and wet-chopped strands (line B). This clearly shows the earlier onset of increased volume with the dry-chopped strands as compared with those which were wet-chopped. This indicates that there was much greater damage to the dry-chopped strands, either in the form of frayed ends or breaking up into small fragments. Table I sets out the results on which the graph is based.

TABLE I

| Glass fibre-type | Beating time (mins. and secs) | Settled volume/gram |
|---|---|---|
| Dry-chopped strands, | 0.0 | 34 |
| produced by chopping | 0.10 | 112 |
| dry roving | 0.20 | 204 |
| | 0.30 | 307 |
| | 0.40 | 383 |
| | 0.50 | 441 |
| | 1.00 | 619 |
| Wet-chopped strands | 0.00 | 30 |
| | 1.00 | 35 |
| | 2.00 | 75 |

0136024

| 3.00 | 148 |
|------|-----|
| 4.00 | 232 |
| 5.00 | 324 |
| 6.00 | 371 |
| 7.00 | 437 |
| 10.00 | 656 |

The results obtained on an experimental basis have been borne out in full scale trials, where it has been possible to run a Magnani machine satisfactorily and to make sheets with strength characteristics comparable to asbestos sheets made on the same machine, while adding the wet-chopped glass strands directly to the system at the same point as asbestos would have been added. The results obtained were also comparable to those obtained when dry-chopped glass fibre was incorporated with special blenders and precautions into the mix. A major saving is therefore achieved in avoiding the additional capital cost of such special blenders. If the fibres are chopped immediately after the filaments have been combined into strands, further savings can be effected by avoiding the need for feed mechanism and creels for forming a roving. The only precaution required is to ensure that any mixer or agitator is not run in a manner which will put the fibre unnecessarily at risk. High speed mixers, for example, should be run at high speed only when forming the aqueous cement slurry and the glass fibre should be added subsequently while the mixer is operated at a low speed or the glass fibre should be added to the slurry subsequently in a separate vessel. The glass fibre-containing slurry should be pumped directly to the machine or, if it is held in an agitator, care should be taken to see that there is a gap between the paddles of the agitator and the sides of the agitator vessel with sufficient clearance to avoid the fibre being scraped against the sides by the paddles.

In the case of Hatschek machine, the slurry is more dilute and there is not the same tendency to damage the fibre during its incorporation into the slurry. However it is necessary to keep the fibre distributed substantially uniformly throughout the slurry during the initial separation of water from the slurry.

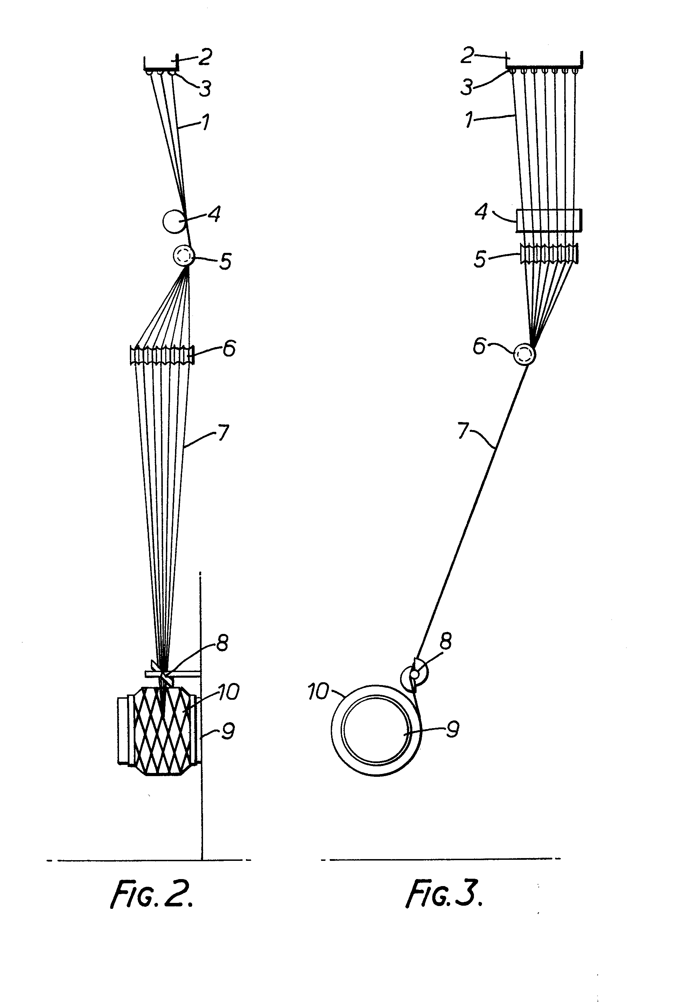

In practicing the invention, the wet chopped glass fibre strands may be produced by use of apparatus as illustrated in Figures 2 to 5. Individual glass filaments 1 are drawn in known manner from the molten glass contained in a bushing 2 through multiple tips 3. The glass composition is normally of an alkali-resistant type, such as that sold by Fibreglass Limited under the registered Trade Mark Cem-FIL and having the following composition in weight per cent:-

| | |
|---|---|
| $SiO_2$ | 62 |
| $Na_2O$ | 14.8 |
| $CaO$ | 5.6 |
| $TiO_2$ | 0.1 |
| $ZrO_2$ | 16.7 |
| $Al_2O$ | 0.8 |

The filaments 1 are sized immediately after drawing and before coming in contact with one another, by means of an applicator roller 4, with an aqueous size composition containing a protective material as described in our U.K. Patent Specification No. 1465059 or No. 1565823. In the specific examples described herein, the composition of the size was the same as that of size X in Example II of Specification No. 1565823, namely:-

| | Weight% |
|---|---|
| Film forming resin (reaction product of propylene glycol diglycidyl ether and ethanolamine reacted to obtain a water-soluble resin) | 5 |
| Gallic acid-ethylene glycol ester (1 mole ethylene glycol to 0.5 mole gallic acid, reacted in presence of 0.008 moles toluene-4-sulphonic acid) as protective material | 10 |
| Silane A187 ( -glycidoxy propyl triethoxy silane sold by Union Carbide) as a linking agent | 0.5 |
| Arquad (Registered Trade Mark) 12/50 (an alkyl quaternary ammonium chloride sold by Armour | 0.5 |

Hess) as a cationic wetting agent

Cymel (Registered Trade Mark) 300 (an aminoplast    2.0
cross-linking agent supplied by Cyanamide of
Great Britain Ltd.)

Acetic acid    2.0 Water to make up to 100%

The individual filaments 1 pass to a first gathering shoe 5 and a second gathering shoe 6, which gather the filaments 1 together into a desired number of strands 7.

The wet strands 7 may then pass direct to a chopping device comprising radially extending knives mounted on a rotating cutter head and cooperating with a backing roll, as described in prior U.S. Patent Specification No. 3869268 mentioned above, and the wet-chopped strands may then pass to a rotary drier, so that chopping is effected by the cutter head while the filaments 1 constituting the strands 7 are still wet from the size applied by roller 4, and drying is only effected thereafter.

In the embodiment illustrated, however, the strands 7, while still wet with the size, are wound on to a cardboard sleeve on a collet 9 to form a cake 10. A spiral 8 traverses the strands 7 along the collet 9 so that the cake is wound in a diagonal fashion. The moisture content of the cake 10 at this stage is about 9% by weight.

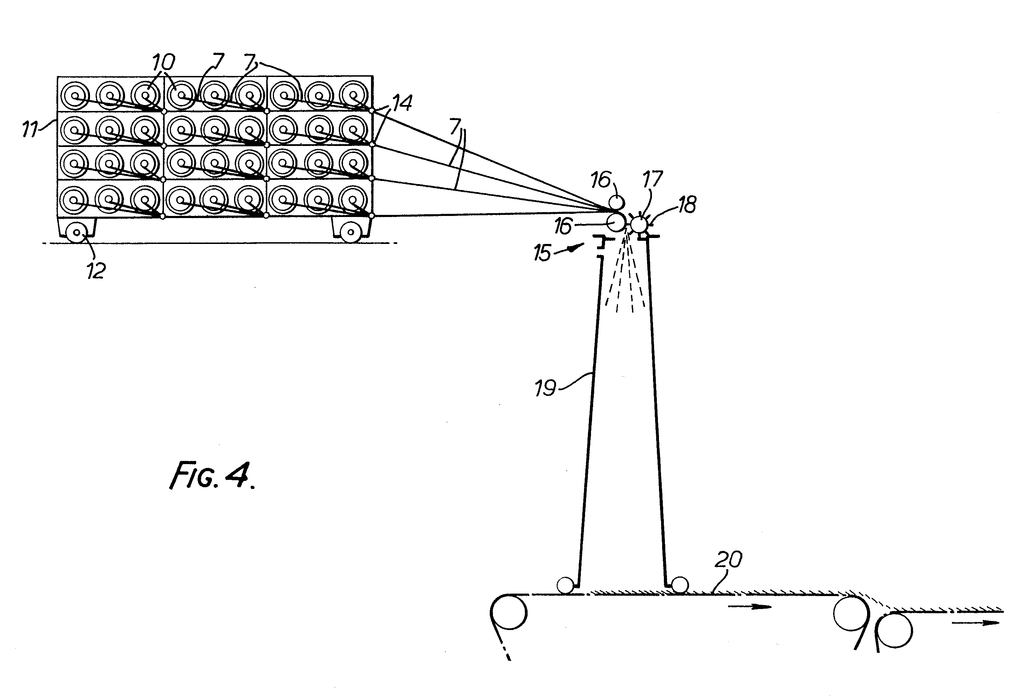

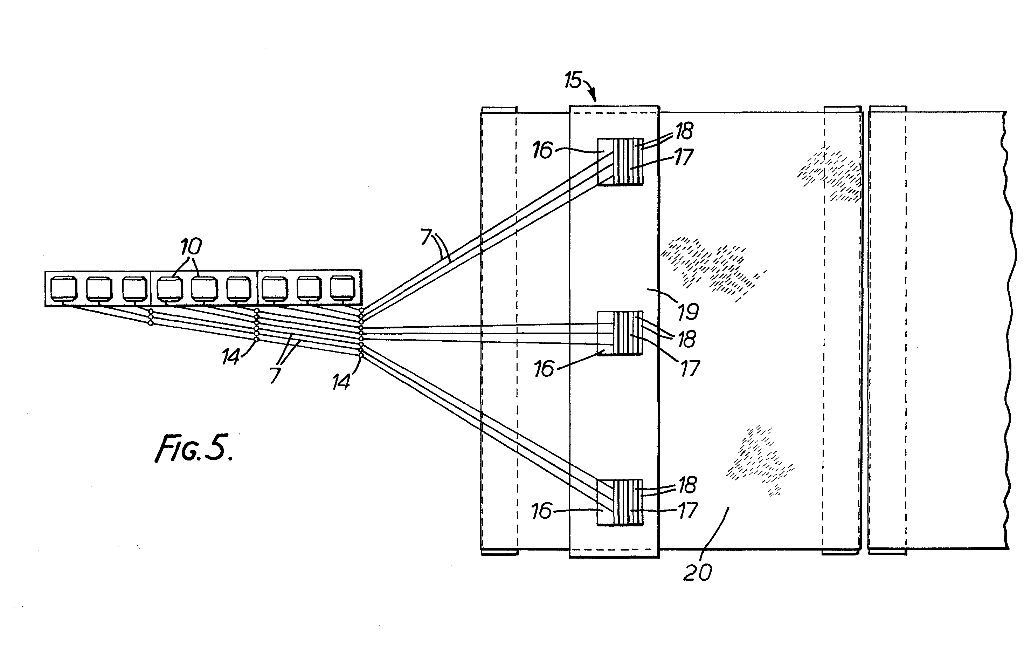

A plurality of cakes 10 are mounted on a creel 11 on a trolley 12, as shown in Figures 4 and 5. Instead of force-drying the cakes in accordance with normal practice, they are allowed to stand in the creel until their moisture content has dropped to a value in the range from 4.5% to 7% by weight, preferably about 5.5% by weight. This takes 5 to 7 days in ambient conditions. To assess the moisture content, a sample or samples is or are taken from the cakes, weighed and then heated to 110° for 2 hours before being placed in a desiccater to cool. Samples are then weighed again and the weight loss, expressed as a percentage, is taken to be the percentage moisture content of the cakes 10.

When the moisture content has dropped to the desired level, strands 7 from the cakes 10 are combined and led through eyes 14 on the creel 11 to a chopping apparatus diagrammatically illustrated at 15. The chopping apparatus 15 comprises pairs of feed rollers 16 and associated rotary cutters 17, each provided with radially extending cutter blades 18 which cooperate with the lower one of each pair of feed rollers 16 to chop the glass fibres to a length determined by the spacing between the radially extending blades 18.

The chopped fibres fall through a casing 19 on to a moving belt 20 which takes them off for drying in a rotary drier (not shown) before they are incorporated in a cement slurry.

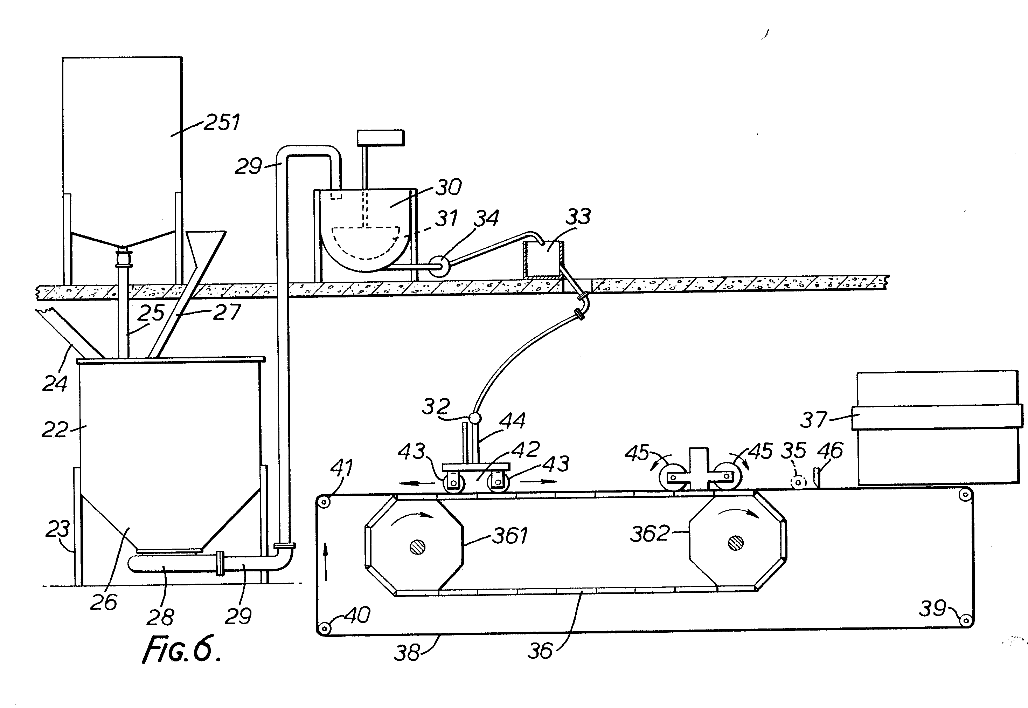

For use with a Magnani sheet or pipe machine as described below, the cement slurry may be prepared in a conventional type of high shear mixing apparatus as illustrated in Figure 6 which comprises a cylindrical container 22 supported by legs 23 and having an inlet chute 24 for solids and an inlet pipe 25 for water from a tank 251, as well as an inlet 27 for additives. The bottom 26 of the container 22 is frusto-conical and contains a rotary impeller (not shown) mounted above a centrifugal pump 28 which feeds slurry to the outlet pipe 29. Cement and additives are fed into the container through inlet chute 24 and inlet 27 and water through pipe 25 in the appropriate proportions, e.g. 75 Kg cement and 5 Kg of additives to 100 Kg water. The impeller and pump 28 are rotated so as to produce high shear mixing conditions in the mixing zone and to extract the slurry through the outlet pipe 29. True high shear mixing conditions, in which lumps and agglomerates of solids are effectively broken up and uniformly dispersed in the slurry, are produced when the power input exceeds 5 Kw per 100 Kg of slurry. In order to incorporate the glass fibre in the slurry without subjecting it to high shear mixing conditions, in cases where the high shear mixer 22 employed to form the cement slurry has insufficient power range to be able to reduce the power input to give low shear mixing conditions, the high shear mixed cement slurry is transferred via the pipe 29 to a secondary mixer or agitator 30 having a rotary paddle 31, and the wet chopped glass fibre strands are added to the agitator 30, so as to be mixed into the slurry under low shear conditions.

The Magnani sheet machine shown in Figure 6 has a perforated sectional conveyor 36 passing around two rotatable rollers 361, 362. The conveyor 36 is closed off at its sides and its interior is connected to a vacuum pump (not shown). A continuous cloth belt 38 is guided around a number of rotatably mounted cylindrical rollers, three of which are shown and designated 39, 40 and 41. The cloth belt 38 is supported by the top of the conveyor 36 and passes between the top of the conveyor 36 and a carriage 42 spaced above the belt 38. The carriage 42 is mounted for reciprocatory movement above the conveyor as shown by the arrows and carries two corrugated rollers 43 which extend transversely across the width of the belt 38. The carriage 42 is driven by a reversible motor (not shown) and the limits of its movement are set by means of limit switches (not shown).

Above the carriage 42 is a depending slurry pipe 44 mounted for transverse movement relative to the top of the conveyor 36. The slurry pipe 42 is connected _via_ a valve 32 to a storage tank 33 which receives slurry from the agitator 30 via a pump 34 and which contains slurry which is continuously agitated by mechanical mixers (not shown).

A pair of corrugated calendering rollers or consolidators 45 is located transversely across the belt 38 downstream of the carriage 42. The belt 38 during its passage above the conveyor 36 is given a corrugated formation which is complementary to the corrugations on the rollers 43 and 45. The corrugations can be formed in the cloth by using a conveyor 36 having a corrugated section and by employing a linear array of spaced rods upstream of the carriage 42. A saw device 35, guillotine 46 and vacuum transfer device 37 are disposed downstream of the calendering rollers 45 for removing cut sections of corrugated sheet from the machine.

In operation, the sectional conveyor 36 and the continuous cloth belt 38 are traversed slowly in a clockwise direction around their respective paths and a vacuum is set up in the interior of conveyor 36. The valve 32 in the slurry pipe 44 is opened to allow the slurry to flow out of the slurry pipe 44 to fill the space between the rollers 43 with a pool of slurry which is uniformly distributed on the belt 38 by means of the reciprocating action of the carriage 42. The slurry conforms to the corrugated shape of the belt 38 and is passed beneath the corrugated calendering rollers 45 which compress the corrugated slurry to a desired thickness. The ribbon of slurry is de-watered as it travels forward by the vacuum acting through the conveyor 36 and cloth belt 38 until the slurry reaches a sufficiently rigid state to be cut into sheets and removed from the belt 38 by the saw 35, guillotine 46 and transfer device 37. The sheets are subsequently conveyed away by a suction conveyor to be hardened and stacked.

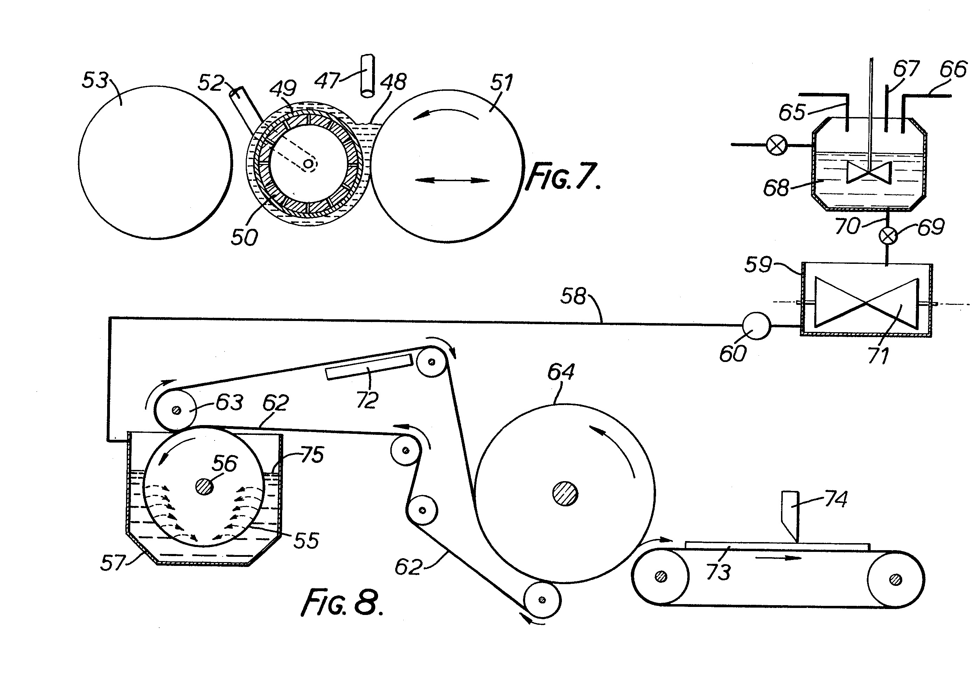

Figure 7 illustrates a Magnani type machine suitable for manufacturing glass fibre reinforced cement pipes, in which a slurry distributor in the form of a pipe 47 receiving slurry from a storage tank similar to the tank 33 of Figure 6 is located over a nip 48 defined between the outer surface of a filter cloth 49, wrapped tightly around a perforated mandrel 50, and a steel forming roller 51. The roller 51 is reciprocable in a horizontal plane, being urged to the left as seen in Figure 7, and is rotatable anti-clockwise, as indicated by the arrows. Horizontal movement of the roller 51 to the right in Figure 7 permits an increase in thickness of the fibre reinforced cement mixture on the filter cloth 49 around the mandrel 50 to be accommodated whilst maintaining a compacting pressure against the mixture.

The mandrel 50, which is mounted for clockwise rotation as seen in Figure 7, is a hollow steel or cast iron tube and is perforated over its entire surface. The mandrel 50 has closed ends and has its interior connected by means of a vacuum line 52 to a vacuum pump (not shown).

The machine as illustrated also has a further roller 53 positioned at a fixed distance from the mandrel which serves to smooth the surface and compress the slurry when it reaches its desired thickness.

In operation, the vacuum is first produced within the mandrel 50 which is rotated clockwise at a slow speed. The slurry is then fed to the nip 48 between the mandrel 50 and roller 51. The roller 51 smooths the surface and compresses the slurry as it is deposited on the filter cloth 49 whilst the suction partially de-waters the slurry. The pressure applied by roller 51 gradually builds up a tough and dense homogeneous mass. The pressure imparts complete cohesion to the successive layers of the fibre reinforced cement mixture while roller 51 moves away from mandrel 50 until the desired thickness has been obtained.

The mandrel 50 with its formed glass fibre reinforced cement pipe is removed from the machine, and then transferred to a second unit where the mandrel 50 is withdrawn. Wooden formers can be inserted in the pipe to maintain its true shape until the cement has set.

Finally a specific example of a Hatschek machine which can be operated in accordance with the present invention will now be described with reference to Figure 8.

As shown in Figure 8, a horizontal, hollow wire mesh cylinder 55 is mounted for clockwise rotation about its cylindrical axis 56 in a slurry-containing vat 57.

A feed pipe 58 extends from a slurry container 59 to the vat 57 and delivers the mixed slurry to the vat 57 under the control of a pump 60.

Above the cylinder 55 is a continuous woven felt belt 62 having a hairy side which is kept in firm, uniform contact with the cylinder 55 by means of a rotatably mounted heavy roller 63. The felt belt 62 passes to an accumulator roller 64 on to which a film of slurry can be transferred from the felt 62. The ends of the cylinder 55 are fitted with seals (not shown) so that water from the slurry can only flow through the wire mesh and out through discharge ports mounted through the seals. In operation, the horizontal cylinder 55 is rotated with a surface speed of the order of 45 metres/min. and a thin, even film of slurry is deposited on its wire mesh surface while the major part of the water is removed. The thickness of the film depends upon the slurry level in the vat 57, its consistency, and the speed of rotation of the cylinder 55.

Cement and any other solid additives are weighed and delivered in controlled amounts by inlets 65, 66 to a paddle-type slurry mixer 68. Chopped strands of glass fibre prepared as described with reference to Figures 2 to 5 are fed in controlled quantities via inlet 67 into the mixer 68. The slurry is delivered via valve 69 along a line 70 to the storage container 59 which incorporates a paddle-type agitator 71.

In operation, a thin film of glass fibre containing cement slurry is collected on the wire mesh of the cylinder 55 and transferred to the hairy side of the woven felt 62. The film is then processed in the same manner as is used in forming asbestos cement products by Hatschek machinery, by passing it over a vacuum box 72 which draws additional water from the film. The film is then passed under the iron or steel accumulator roller 64 to which it is transferred in a continuous operation until a sheet is built up to a desired thickness. The sheet can be knifed along a groove in the accumulator roller and peeled from it on to a conveyor table 73 and cut to desired lengths by a guillotine 74.

In practice the flow rate of the slurry passing through the pipe 58 is controlled so as to maintain the slurry in the vat 57 at a substantially constant level 75. Undue variations in the level of the slurry can cause variations in the thickness of the film deposited on the cylinder wall.

If the slurry is not agitated while in the storage tank 59, e.g. by paddle agitator 71 or cylindrical agitators, the glass fibre will tend to settle out of the dilute slurry and not be distributed at the correct concentration in the film formed on the mesh of the rotating cylinder 55. Previously in operating a Hatschek machine with dry-chopped glass fibre strands which had been chopped from dry rovings, a compromise had to be reached between accepting some damage to the glass fibre due to the agitators and avoiding fibre settling on the one hand, and avoiding fibre damage and accepting some fibre settling on the other hand. When using chopped strands which have been chopped wet and dried before incorporation into the slurry, we can operate at agitator speeds which enable us to maintain a substantially uniform distribution of fibre in the slurry in the vat 57, without damage to the glass fibre reaching a level which results in a product of unacceptable strength characteristics in the marketplace.

CLAIMS

1. A method of producing a glass fibre reinforced cement composite material in which glass fibre in the form of chopped strands is incorporated into a cement slurry by a mixing process, characterised in that the chopped strands used are formed by chopping strands while they are still wet or at least moist with a size containing a protective material to reduce deterioration of the glass fibre in the cement matrix, and drying the chopped strands before incorporating them into the slurry.

2. A method according to claim 1 characterised in that the chopped strands used are formed by sizing glass filaments as they are drawn from the molten glass with an aqueous size containing the protective material, forming the wet sized filaments into strands and immediately thereafter chopping the wet strands, and drying the chopped strands thus produced before incorporating them in the cement slurry.

3. A method according to claim 1 characterised in that the moisture content of the strands is controlled so as to be within the range from 4.5 to 7% by weight when chopping is effected.

4. A method according to claim 3 characterised in that the moisture content of the strands is substantially 5.5% when chopping is effected.

5. A method according to claim 3 characterised in that the chopped strands used are formed by sizing glass filaments as they are drawn from the molten glass with an aqueous size containing the protective material, forming the wet sized filaments into strands, winding the wet strands into a cake, allowing the cake to stand in ambient conditions until the moisture content of the strands is reduced to a level within the range from 4.5% to 7% by weight, unwinding the moist strands from the cake and chopping them to produce the chopped strands and drying the chopped strands before incorporating them in the cement slurry.

6. A method according to claim 5 wherein the chopped strands are dried in a rotary drier.

7. A method according to any one of the preceding claims characterised in that the protective material contained in the size is a polyhydroxy substituted aromatic compound.

Fig. 1.

1/6

0136024

2/6

0136024

FIG.2.

FIG.3.

0136024

*Fig. 4.*

0136024

Fig.5.

FIG.6.

0136024

*Fig.7.*

*Fig.8.*